# EUROPEAN PATENT SPECIFICATION

(11) **EP 2 726 319 B1**
(45) Date of publication and mention of the grant of the patent: **31.05.2017**
(21) Application number: 12731428.4
(22) Date of filing: 28.06.2012
(51) Int. Cl.: B60L 11/18, B60K 15/05, E05D 3/00, E05D 11/10, B60K 15/04

(54) **ENCLOSURE AND ELECTRICAL SOCKET COMPRISING SUCH AN ENCLOSURE**
GEHÄUSE UND ELEKTRISCHE STECKDOSE MIT EINEM SOLCHEN GEHÄUSE
BOÎTIER ET DOUILLE ÉLECTRIQUE COMPRENANT UN TEL BOÎTIER

(30) Priority: 28.06.2011 WO PCT/IB2011/001788
(43) Date of publication of application: 07.05.2014
(73) Proprietor: Delphi International Operations Luxembourg S.à r.l., 4940 Bascharage (LU)
(72) Inventor: AESCHBACHER, Michel, F-28300 Saint-Prest (FR); DUQUESNE, Arnaud, F-28230 Epernon (FR)
(74) Representative: Delphi France SAS
(86) International application number: PCT/EP2012/062646
(87) International publication number: WO 2013/010774

(56) References cited:
- DE-A1- 4 426 425
- FR-A1- 2 614 953
- GB-A- 2 345 673
- US-A1- 2011 151 693
- US-B1- 6 352 295

## Description

### FIELD OF THE INVENTION

The invention relates to enclosures and electrical sockets comprising such enclosures.

### BACKGROUND OF THE INVENTION

An enclosure usually comprises walls and a door which can be rotated opened or closed with respect to the walls. Bistable systems have also been provided so as to prevent the door from staying in an intermediate position. Whatever the position of the door, such systems will urge the door opened or closed.

Such systems are for example provided to close the access to the fuel tank of vehicle cars. In order to fuel the car, the bistable door will be placed open in order to access to the closing cap of the tank.

Due to their autonomy still lower than that of fuel cars, electrical cars need to be powered more often over their life time. There is therefore a need to provide for an enclosure with an increased life time (in terms of number of opening/closing cycles). An enclosure comprising the features of the preamble of claim 1 is known from US 6 352 295 B1.

### SUMMARY OF THE INVENTION

It is provided an enclosure comprising a wall, and a door which is mounted to rotate with respect to the wall between an opened position and a closed position around a rotation axis. An intermediate position can be defined between the opened and closed positions.

The enclosure comprises a bistable urging system which urges the door, with respect to the wall, toward the closed position when the door is between the closed and the intermediate positions. The bistable urging system urges the door toward the opened position when the door is between the intermediate and opened positions.

The bistable urging system comprises:
- a guide fixed to the wall,
- a urging spring,
- an integral body mounted to slide on the guide under urging action of the urging spring, and having a top face,
- an actuator integral with the door, and comprising a cam surface facing the top face of the integral body.

The top face of the integral body forms a cam follower which cooperates with the actuator so that, upon a movement of the door between the opened and closed positions, the actuator causes a movement of the integral body along the guide.

The actuator has an apex and two lateral faces, one on each side of the apex so that, when the apex is in contact with the cam follower, the door is in its intermediate position and the urging spring urges the body.

The cam surface of the actuator and the cam follower both have a profiled surface which is cylindrical with an axis parallel to the rotation axis as generatrix.

With these features, it is provided an enclosure which can cope with the stringent requirements described above. Further, this enclosure, although beneficial for this specific requirement, could also be provided for other applications than closing the charge interface for the electrical vehicle car application.

In some embodiments, one might also use one or more of the features defined in the dependant claims.

### BRIEF DESCRIPTION OF THE DRAWINGS

Other characteristics and advantages of the invention will readily appear from the following description of two of its embodiments, provided as a non-limitative example, and of the accompanying drawings.

On the drawings :
- Fig. 1 is a schematic view of a possible application of the invention,
- Fig. 2 is a perspective side view of an embodiment of an enclosure,
- Fig. 3 is a perspective top view of a door for the embodiment of Fig. 2,
- Figs. 4a and 4b are partial sectional views through the housing along line IV-IV of Fig. 2, respectively in an uncompressed and a compressed condition of the spring,
- Fig. 5 is a partial sectional view through the housing along line V-V of Fig. 4a,
- Fig. 6a and 6b are partial views of the locking system respectively in locked condition and ongoing locking condition, and
- Fig. 7 is a view similar to Fig. 2 for a second embodiment.

On the different Figures, the same reference signs designate like or similar elements.

### DETAILED DESCRIPTION

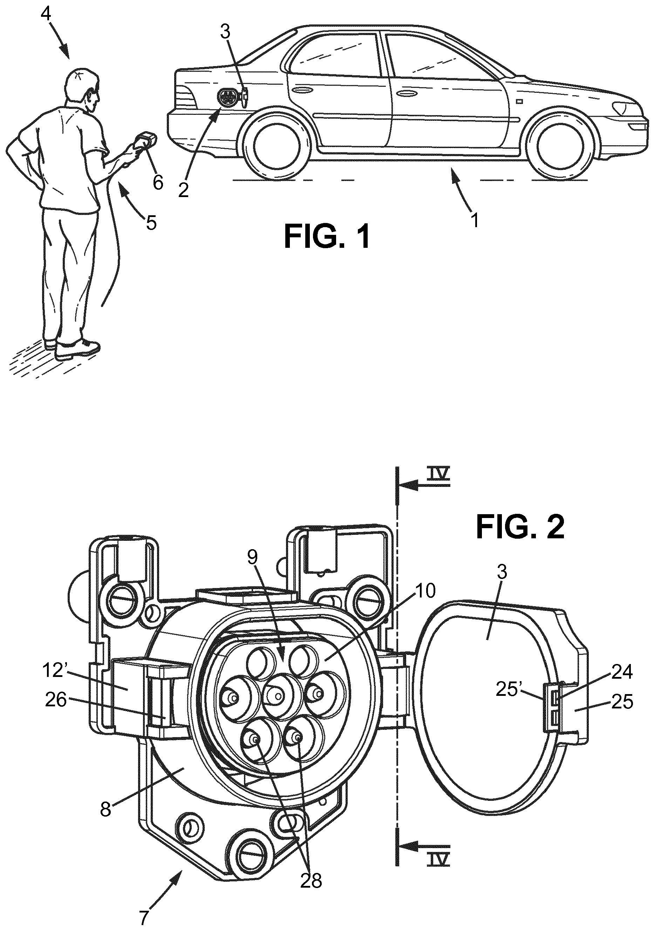

Figure 1 schematically shows an electrical car 1 having a power charge socket 2 closed by a door 3. A powering system is schematically shown, having a cable 5 terminating with a power charge plug 6 to be electrically connected to the charge socket 2.

Figure 2 now schematically shows an enclosure 7 located inside the vehicle car 1. The enclosure has a wall 8 located inside the car body. The door 3 is shown in its open condition, and is rotatably movable with respect to the wall 8 in order to alternately open or close the enclosure. As shown in Fig. 2, in the open condition of the door 3, an electrical connector 9 located inside the enclosure is accessible for powering by the powering system. The electrical connector 9 comprises a housing 10 defining a plurality of pathways, and electrical contacts 28 located inside these pathways.

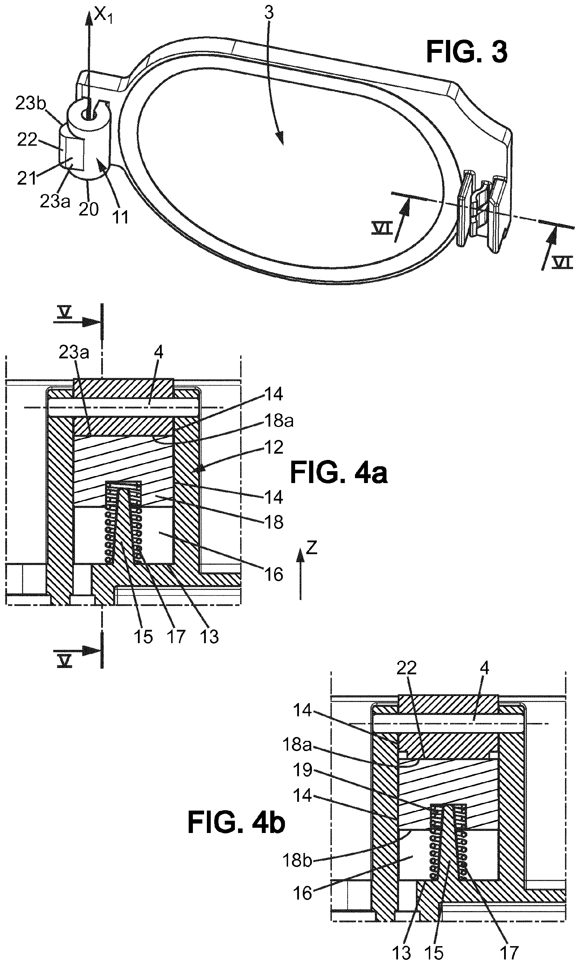

Turning to Fig. 3, the door 3 is mounted to rotate with respect to the wall 8 about a rotation axis X1 defined for example by an axis 4 of the wall 8 passing through a sleeve 11 of the door.

The door 3 further comprises part of a bistable mechanism on one side, and part of a locking system on the other side, as will be discussed below in more details in relation to Figs. 4a to 5, and 6a and 6b, respectively.

As can be seen on Fig. 4a, a housing 12 is defined in the enclosure, in particular fixed with respect to the wall. The housing 12 has a bottom wall 13 from which guiding walls 14 extend upward toward the axis 4. The bottom wall 13 and guiding walls 14 together define a cavity.

According to an exemplary embodiment, a peg 15 projects upward from the bottom wall 13 inside the cavity 16. The peg 15 forms a seat for a coil spring 17. Hence, the coil spring 17 surrounds the peg 15, with one end resting on the bottom wall 13, and the other opposed end receiving a body 18. The body 18 has lateral walls which slidingly cooperate with the guiding walls 14 of the cavity, so that the body 18 moves along a given translation axis Z. The body 18 may be provided with a recess 19 on its bottom side, so as to receive therein the second end on the spring 17. In the open condition of the door, the spring 17 is uncompressed, or might be slightly compressed.

A bistable system is provided for opening or closing the door 3 with respect to the wall 8. In an intermediate position of the door, between its open and closed position, corresponding to the position of Fig. 4b, the spring 17 is in its most compressed state, so that it urges the body 18 along direction Z. In both the open and closed conditions of the door, which correspond to the drawing of Fig 4a, the spring 17 is only slightly compressed, if at all. In the open condition, the door 3 is maintained by a not shown abutment. In the closed condition, the door is maintained by the locking system which will be described later. The degree of compression of the spring in the open and closed conditions might differ.

This bistable system is provided through cooperation of an actuator 20 with the body 18. The actuator is integral with the door 3, for example carried by the sleeve 11, and comprises a cam surface 21 with an apex 22 which projects farthest away from the axis X₁. The actuator 20 further comprises two side surfaces 23a and 23b surrounding the apex. As shown on Fig. 3, the cam surface 21 of the actuator has a profiled surface which is cylindrical with an axis parallel to the rotation axis X₁ as generatrix.

The body 18 is provided integral and has a top surface 18a opposite to the bottom surface 18b which receives the spring 17. The top face 18a of the body forms a cam follower which cooperates with the cam surface 21 of the actuator. The cam follower also has a profiled surface which is cylindrical with an axis parallel to the rotation axis X₁ as generatrix.

Hence, when the door is in its intermediate position (Fig. 4b) the apex 22 of the cam surface 21 is in contact with the top surface 18a of the body. Any slight deviation from this position will cause the release of the spring, which will push the door in rotation with respect to the wall around the axis X₁. For example, in the closed condition of the door, the top surface 18a of the body 18 cooperates with the line joining the side surface 23a of the actuator with the sleeve 11.

In the open position of the door, the geometry of the system would be similar to the one of Fig. 4a, with the top surface 18a of the body cooperating with the other side surface 23b of the actuator 20.

An exemplary locking system will now be described with reference to Figs. 2, 3 and 6a and 6b. A flexible tongue 24 is provided on the door 3 between two parallel walls 25. An axis 26 symmetrical to the axis 4 is provided integral with the wall 8.

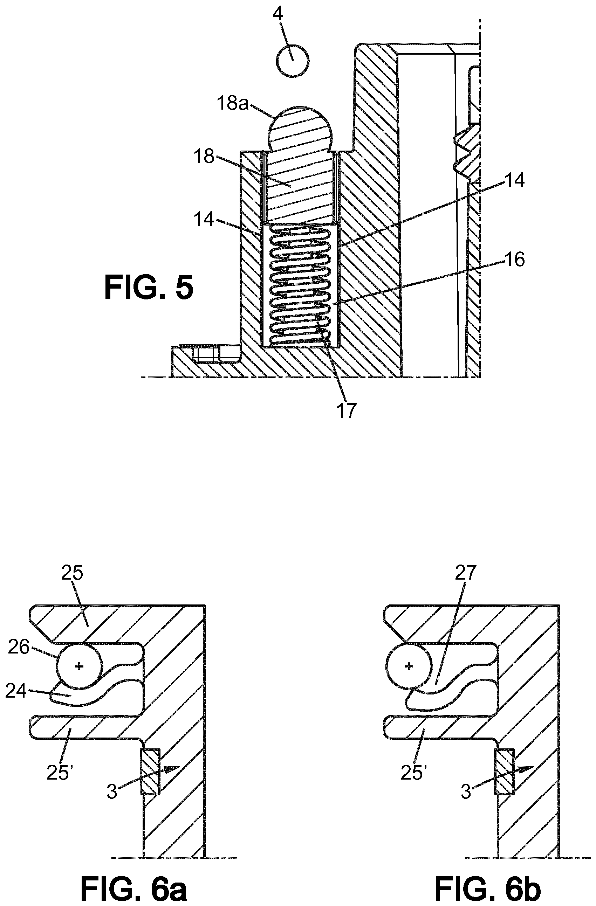

The flexible tongue 24 is provided with a recess 27 shaped to receive the axis 26 after a slight deflexion of the tongue 24, as shown on Fig. 6a. In the locked condition of the door 3, the axis 26 is maintained between the flexible tongue 24 and one of the walls 25 facing this tongue. In order to open the door 3, the tongue 24 will be resiliently deformed, as shown on Fig. 6b, thereby enabling the axis 26 to be removed from the recess 27. The wall 25' is provided on the other side of the tongue 24 which has the recess 27, and works as an abutment for the tongue 24 for preventing an additional deflexion thereof beyond the elastic limit of the chosen material.

The spring 17 may be dimensioned so that the closing of the door 3 under the effect of the spring 17 will automatically cause the tongue 24 to trap the axis 26.

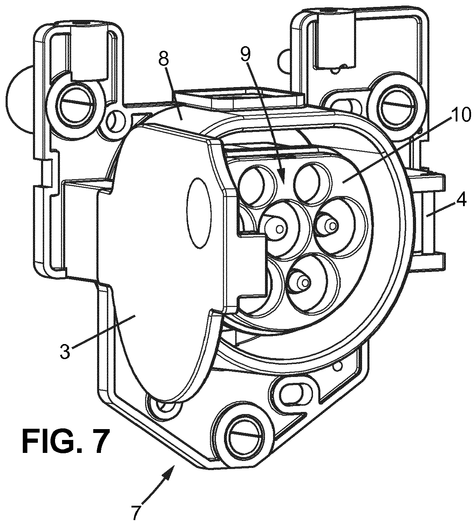

The axis 4 and 26 can be provided symmetrical to one another. In particular, the side of the enclosure which has the axis 26 may comprise a housing 12' with a cavity, a bottom wall, a peg and guiding walls similar to the ones which were described above in relation to Figs. 4a, 4b and 5. That will enable to provide easily with a flexible device that would be mountable either with a door opening on the left hand side as shown on Fig. 7, or one the right hand side, as shown on Fig. 2.

Although the above description was performed for the specific application of powering an electrical vehicle, it is believed that the above invention may be applied in other applications. In particular, providing the cam surface and the cam follower with a profiled surface which is cylindrical with an axis parallel to the rotation axis as generatrix enables to dispatch the stresses on a whole surface along a line parallel to the rotation axis, and would thus limit wear of the system, thus enabling it to stand a longer life.

Providing the body 18 integral with a top surface provided with the cam follower, and a bottom surface opposite thereto, and to slide in a cavity receiving the spring mounted on a peg, makes the assembly of the system easy and reliable.

## Claims

1. An enclosure comprising:
- a wall (8),
- a door (3) rotatably mounted with respect to the wall between an opened and a closed positions around a rotation axis (X₁), an intermediate position being defined between the opened and closed positions,
- a bistable urging system adapted to urge the door, with respect to the wall, toward the closed position when the door is between the closed and the intermediate positions, and toward the opened position when the door is between the intermediate and opened positions,
wherein the bistable urging system comprises:
- a guide (14) in fixed relationship to the wall,
- a urging spring (17),
- an integral body (18) slidably mounted on the guide, under urging action of the urging spring, and having a top face,
- an actuator (20) integral with the door, and comprising a cam surface (21) facing the top face of the integral body,
wherein the top face (18a) of the integral body (18) forms a cam follower which cooperates with the actuator (20) so that, upon a movement of the door (3) between the opened and closed positions, the actuator (20) causes a movement of the integral body along the guide,
the actuator having an apex (22) and two lateral faces (23a, 23b), one on each side of the apex, so that, when the apex is in contact with the cam follower, the door (3) is in its intermediate position and the urging spring urges the body, **characterized in that** the cam surface (21) of the actuator (20) and the cam follower both have a profiled surface which is cylindrical with an axis parallel to the rotation axis (X₁) as generatrix.

2. Enclosure according to claim 1, wherein the bistable urging system comprises a housing (12) defining a cavity (16) surrounded by guiding walls forming said guide,
wherein the body (18) comprises a bottom face (18b) cooperating with the urging spring (17), and opposed to the top face (18a), and lateral faces extending between the bottom and top faces and cooperating with the guiding walls of the cavity to guide a movement between a rest position where the urging spring is not much compressed to an urging position where the urging spring is more compressed.

3. Enclosure according to claim 2 wherein, when the apex (22) is in contact with the cam follower, the body (18) is in its urging position.

4. Enclosure according to any of claims 2 to 3, wherein the spring (17) is a coil spring (17) provided in the cavity and having a first end and an opposed second end cooperating with the body.

5. Enclosure according to claim 4, wherein the cavity has a bottom wall (13) provided with a projecting peg (15), wherein the second end of the coil spring surrounds the projecting peg, and wherein the first end of the coil spring supports the body.

6. An enclosure comprising:
- a wall (8),
- a door (3) rotatably mounted with respect to the wall between an opened and a closed positions about a rotation axis (X₁), an intermediate position being defined between the opened and closed positions,
- a bistable urging system adapted to urge the door, with respect to the wall, toward the closed position when the door is between the closed and the intermediate positions, and toward the opened position when the door is between the intermediate and opened positions,
wherein the bistable urging system comprises:
- a housing (12) defining a cavity (16) surrounded by guiding walls,
- a urging spring (17),
- an integral body (18) slidably mounted on the guide, under urging action of the urging spring, having a top face, a bottom face cooperating with the urging spring (17), and opposed to the top face, and lateral faces extending between the bottom and top faces and cooperating with the guiding walls of the cavity to guide a movement between a rest position where the urging spring is not much compressed to an urging position where the urging spring is more compressed,
- an actuator (20) integral with the door, and comprising a cam surface (21) facing the top face of the integral body,
wherein the top face (18a) of the integral body (18) forms a cam follower which cooperates with the actuator so that, upon a movement of the door between the opened and closed positions, the actuator (20) causes a movement of the integral body (18) along the guide,
the actuator (20) having an apex (22) and two lateral faces (23a, 23b), one on each side of the apex, so that, when the apex is in contact with the cam follower, the door is in its intermediate position, the body is in its urging position and the urging spring urges the body, **characterized in that** the cavity has a bottom wall (13) provided with a projecting peg (15), wherein the second end of the coil spring surrounds the projecting peg, and wherein the first end of the coil spring supports the body, - an actuator (20) integral with the door, and comprising a cam surface (21) facing the top face of the integral body, and **in that** the cam surface (21) of the actuator (20) and the cam follower both have a profiled surface which is cylindrical with an axis parallel to the rotation axis (X₁) as generatrix.

7. Enclosure according to any of claims 2 to 6, wherein the housing (12) is provided on one side, and wherein an identical housing (12') is provided on the other side of the enclosure.

8. Enclosure according to any of claims 1 to 7, further comprising a locking system adapted to lock the door and the wall together in the closed position of the door.

9. Enclosure according to claim 8, wherein the locking system comprises a deflectable tongue (24) adapted to snap on a rigid part (26), the tongue and rigid part being respectively provided on one of the door and wall.

10. Enclosure according to claim 9, wherein the locking system further comprises two parallel limiting surfaces (25, 25'), surrounding the rigid part, and adapted to limit deflection of the deflectable tongue upon snapping.

11. Electrical socket comprising an enclosure according to any of claims 1 to 10, and wherein the wall surrounds electrical contacts.

## Patentansprüche

1. Eine Umhausung, die aufweist:
- eine Wand (8),
- eine Tür (3), die rotierbar in Bezug auf die Wand zwischen einer offenen und einer geschlossenen Position um eine Rotationsachse (X₁) angebracht ist, wobei eine Zwischenposition zwischen der offenen und der geschlossenen Position definiert ist,
- ein bistabiles Beeinflussungssystem, das ausgebildet ist zum Beeinflussen der Tür, in Bezug auf die Wand, in Richtung der geschlossenen Position, wenn die Tür zwischen der geschlossenen und der Zwischenposition ist, und in Richtung der offenen Position, wenn die Tür zwischen der Zwischenposition und der offenen Position ist,
wobei das bistabile Beeinflussungssystem aufweist:
- eine Führung (14) in einer festen Beziehung mit der Wand,
- eine Beeinflussungsfeder (17),
- einen integralen Körper (18), der verschiebbar an der Führung angebracht ist, unter Beeinflussungswirkung der Beeinflussungsfeder, und mit einer Oberseite,
- einen Aktuator (20) integral mit der Tür und eine Nockenfläche (21) aufweisend, die der Oberseite des integralen Körpers zugewandt ist,
wobei die Oberseite (18a) des integralen Körpers (18) einen Nockenfolger bildet, der mit dem Aktuator (20) zusammenwirkt, so dass bei einer Bewegung der Tür (3) zwischen der offenen und der geschlossenen Position der Aktuator (20) eine Bewegung des integralen Körpers entlang der Führung bewirkt,
wobei der Aktuator einen Scheitel (22) und zwei Seitenflächen (23a, 23b) hat, eine auf jeder Seite des Scheitels, so dass, wenn der Scheitel in Kontakt mit dem Nockenfolger ist, die Tür (3) in ihrer Zwischenposition ist und die Beeinflussungsfeder den Körper beeinflusst,
**dadurch gekennzeichnet, dass** die Nockenfläche (21) des Aktuators (20) und der Nockenfolger beide eine profilierte Oberfläche haben, die zylindrisch ist mit einer Achse parallel zu der Rotationsachse (X₁) als Generatrix.

2. Umhausung gemäß Anspruch 1, wobei das bistabile Beeinflussungssystem ein Gehäuse (12) aufweist, das einen Hohlraum (16) definiert, der von Führungswänden umgeben ist, die die Führung bilden,
wobei der Körper (18) eine untere Seite (18b) aufweist, die mit der Beeinflussungsfeder (17) zusammenwirkt und gegenüber der oberen Seite (18a) ist, und Seitenflächen, die sich zwischen den unteren und oberen Seiten erstrecken und mit den Führungswänden des Hohlraums zusammenwirken, um eine Bewegung zwischen einer Ruheposition, in der die Beeinflussungsfeder nicht viel komprimiert ist, in eine Beeinflussungsposition zu führen, in der die Beeinflussungsfeder komprimierter ist.

3. Umhausung gemäß Anspruch 2, wobei sich, wenn der Scheitel (22) in Kontakt mit dem Nockenfolger ist, der Körper (18) in seiner Beeinflussungsposition befindet.

4. Umhausung gemäß einem der Ansprüche 2 bis 3, wobei die Feder (17) eine Schraubenfeder (17) ist, die in dem Hohlraum vorgesehen ist und ein erstes Ende und ein gegenüberliegendes zweites Ende hat, das mit dem Körper zusammenwirkt.

5. Umhausung gemäß Anspruch 4, wobei der Hohlraum eine untere Wand (13) hat, die mit einem vorstehenden Zapfen (15) vorgesehen ist, wobei das zweite Ende der Schraubenfeder den vorstehenden Zapfen umgibt, und wobei das erste Ende der Schraubenfeder den Körper trägt.

6. Eine Umhausung, die aufweist:
- eine Wand (8),
- eine Tür (3), die rotierbar in Bezug auf die Wand zwischen einer offenen und einer geschlossenen Position um eine Rotationsachse (X₁) angebracht ist, wobei eine Zwischenposition zwischen der offenen und der geschlossenen Position definiert ist,
- ein bistabiles Beeinflussungssystem, das ausgebildet ist zum Beeinflussen der Tür, in Bezug auf die Wand, in Richtung der geschlossenen Position, wenn die Tür zwischen der geschlossenen und der Zwischenposition ist, und in Richtung der offenen Position, wenn die Tür zwischen der Zwischenposition und der offenen Position ist,
wobei das bistabile Beeinflussungssystem aufweist:
- ein Gehäuse (12), das einen Hohlraum (16) umgeben durch Führungswände definiert,
- eine Beeinflussungsfeder (17),
- einen integralen Körper (18), der verschiebbar an der Führung angebracht ist, unter Beeinflussungswirkung der Beeinflussungsfeder, mit einer oberen Seite, einer unteren Seite, die mit der Beeinflussungsfeder (17) zusammenwirkt und gegenüber der oberen Seite ist, und Seitenflächen, die sich zwischen den unteren und oberen Seiten erstrecken und mit den Führungswänden des Hohlraums zusammenwirken, um eine Bewegung zwischen einer Ruheposition, in der die Beeinflussungsfeder nicht viel komprimiert ist, in eine Beeinflussungsposition zu führen, in der die Beeinflussungsfeder komprimierter ist,
- einen Aktuator (20) integral mit der Tür und eine Nockenfläche (21) aufweisend, die der Oberseite des integralen Körpers zugewandt ist,
wobei die Oberseite (18a) des integralen Körpers (18) einen Nockenfolger bildet, der mit dem Aktuator (20) zusammenwirkt, so dass bei einer Bewegung der Tür zwischen der offenen und der geschlossenen Position der Aktuator (20) eine Bewegung des integralen Körpers (18) entlang der Führung bewirkt,
wobei der Aktuator einen Scheitel (22) und zwei Seitenflächen (23a, 23b) hat, eine auf jeder Seite des Scheitels, so dass, wenn der Scheitel in Kontakt mit dem Nockenfolger ist, die Tür in ihrer Zwischenposition ist, der Körper in seiner Beeinflussungsposition ist und die Beeinflussungsfeder den Körper beeinflusst,
**dadurch gekennzeichnet, dass** der Hohlraum eine untere Wand (13) hat, die mit einem vorstehenden Zapfen (15) vorgesehen ist, wobei das zweite Ende der Schraubenfeder den vorstehenden Zapfen umgibt, und wobei das erste Ende der Schraubenfeder den Körper trägt, - einen Aktuator (20) integral mit der Tür und eine Nockenfläche (21) aufweisend, die der oberen Seite des integralen Körpers zugewandt ist, und dadurch, dass die Nockenfläche (21) des Aktuators (20) und der Nockenfolger beide eine profilierte Oberfläche haben, die zylindrisch ist mit einer Achse parallel zu der Rotationsachse (X₁) als Generatrix.

7. Umhausung gemäß einem der Ansprüche 2 bis 6, wobei das Gehäuse (12) an einer Seite vorgesehen ist und wobei ein identisches Gehäuse (12') an der anderen Seite der Umhausung vorgesehen ist.

8. Umhausung gemäß einem der Ansprüche 1 bis 7, die weiter ein Verriegelungssystem aufweist, das ausgebildet ist zum zusammen Verriegeln der Tür und der Wand in der geschlossenen Position der Tür.

9. Umhausung gemäß Anspruch 8, wobei das Verriegelungssystem eine ablenkbare Zunge (24) aufweist, die ausgebildet ist, auf einem starren Teil (26) einzurasten, wobei die Zunge und der starre Teil jeweils an einer der Tür und der Wand vorgesehen sind.

10. Umhausung gemäß Anspruch 9, wobei das Verriegelungssystem weiter zwei parallele Begrenzungsflächen (25, 25') aufweist, die den starren Teil umgeben, und ausgebildet sind zum Begrenzen einer Ablenkung der ablenkbaren Zunge beim Einrasten.

11. Elektrische Steckdose mit einer Umhausung gemäß einem der Ansprüche 1 bis 10, und wobei die Wand elektrische Kontakte umgibt.

## Revendications

1. Boîtier comprenant :
- une paroi (8),
- une porte (3) montée en rotation par rapport à la paroi entre une position ouverte et une position fermée autour d'un axe de rotation (X₁), une position intermédiaire étant définie entre la position ouverte et la position fermée,
- un système de sollicitation bistable adapté à solliciter la porte, par rapport à la paroi, vers la position fermée quand la porte est entre la position fermée et la position intermédiaire, et vers la position ouverte quand la porte est entre la position intermédiaire et la position ouverte,
dans lequel le système de sollicitation bistable comprend :
- un guide (14) en relation fixe à la paroi,
- un ressort de sollicitation (17),
- un corps intégral (18) monté en coulissement sur le guide, sous l'action de sollicitation du ressort de sollicitation, et ayant une face supérieure,
- un actionneur (20) intégral avec la porte, et comprenant une surface en came (21) face à la face supérieure du corps intégral,
dans lequel la face supérieure (18a) du corps intégral (18) forme un suiveur de came qui coopère avec l'actionneur (20) de telle façon que, lors d'un mouvement de la porte (3) entre la position ouverte et la position fermée, l'actionneur (20) entraîne un mouvement du corps intégral le long du guide, l'actionneur ayant un sommet (22) et deux faces latérales (23a, 23b), une de chaque côté du sommet, de telle façon que lorsque le sommet est en contact avec le suiveur de came, la porte (3) est dans sa position intermédiaire et le ressort de sollicitation sollicite le corps,
**caractérisé en ce que**
la surface en came (21) de l'actionneur (20) et le suiveur de came ont tous une surface profilée qui est cylindrique avec un axe parallèle à l'axe de rotation (X₁) à titre de génératrice.

2. Boîtier selon la revendication 1, dans lequel le système de sollicitation bistable comprend une boîte (12) définissant une cavité (16) entourée par des parois de guidage formant ledit guide,
dans lequel le corps (18) comprend une face inférieure (18b) qui coopère avec le ressort de sollicitation (17) et qui est opposée à la face supérieure (18a), et des faces latérales s'étendant entre la face supérieure et la face inférieure et coopérant avec les parois de guidage de la cavité pour guider un mouvement entre une position de repos dans laquelle le ressort de sollicitation n'est pas beaucoup comprimé jusqu'à une position de sollicitation dans laquelle le ressort de sollicitation est plus comprimé.

3. Boîtier selon la revendication 2, dans lequel, quand le sommet (22) est en contact avec le suiveur de came, le corps (18) est dans sa position de sollicitation.

4. Boîtier selon l'une quelconque des revendications 2 à 3, dans lequel le ressort (17) est un ressort à boudin (17) prévu dans la cavité et ayant une première extrémité et une seconde extrémité opposée qui coopère avec le corps.

5. Boîtier selon la revendication 4, dans lequel la cavité a une paroi inférieure (13) dotée d'un téton en projection (15), dans lequel la seconde extrémité du ressort à boudin entoure le téton en projection, et dans lequel la première extrémité du ressort à boudin supporte le corps.

6. Boîtier comprenant :
- une paroi (8),
- une porte (3) montée en rotation par rapport à la paroi entre une position ouverte et une position fermée autour d'un axe de rotation (X₁), une position intermédiaire étend défini entre la position ouverte et la position fermée,
- un système de sollicitation bistable adapté à solliciter la porte, par rapport à la paroi, vers la position fermée quand la porte est entre la position fermée et la position intermédiaire, et vers la position ouverte quand la porte est entre la position intermédiaire et la position fermée,
dans lequel le système de sollicitation bistable comprend :
- un boîtier (12) définissant une cavité (16) entourée par des parois de guidage,
- un ressort de sollicitation (17),
- un corps intégral (18) monté en coulissement sur le guide, sous l'action de sollicitation du ressort de sollicitation, ayant une face supérieure, une face inférieure coopérant avec le ressort de sollicitation (17) et opposée à la face supérieure, et des faces latérales s'étendant entre la face inférieure et la face supérieure et coopérant avec les parois de guidage de la cavité pour guider un mouvement entre une position de repos dans laquelle le ressort de sollicitation n'est pas beaucoup comprimé jusqu'à une position de sollicitation dans laquelle le ressort de sollicitation est plus comprimé,
- un actionneur (20) intégral avec la porte, et comprenant une surface en came (21) face à la face supérieure du corps intégral,
dans lequel la face supérieure (18a) du corps intégral (18) forme un suiveur de came qui coopère avec l'actionneur de telle façon que, lors d'un mouvement de la porte entre la position ouverte et la position fermée,
l'actionneur (20) provoque un mouvement du corps intégral (18) le long du guide,
l'actionneur (20) ayant un sommet (22) et deux faces latérales (23a, 23b), une de chaque côté du sommet, de sorte que, quand le sommet est en contact avec le suiveur de came, la porte est dans sa position intermédiaire, le corps est dans sa position de sollicitation et le ressort de sollicitation sollicite le corps,
**caractérisé en ce que** la cavité a une paroi inférieure (13) dotée d'un téton en projection (15), dans lequel la seconde extrémité du ressort à boudin entoure le téton en projection, et dans lequel la première extrémité du ressort à boudin supporte le corps, et **en ce que**
la surface en came (21) de l'actionneur (20) et le suiveur de came ont tous deux une surface profilée qui est cylindrique avec un axe parallèle à l'axe de rotation (X₁) à titre de génératrice.

7. Boîtier selon l'une quelconque des revendications 2 à 6,
dans lequel la boîte (12) est prévue sur un côté, et
dans lequel une boîte identique (12') est prévue sur l'autre côté du boîtier.

8. Boîtier selon l'une quelconque des revendications 1 à 7, comprenant en outre un système de blocage adapté à bloquer la porte et la paroi ensemble dans la position fermée de la porte.

9. Boîtier selon la revendication 8, dans lequel le système de blocage comprend une languette (24) susceptible d'être défléchie et adaptée à s'encliqueter sur une partie rigide (26), la languette et la partie rigide étant respectivement prévues sur l'un des éléments que sont la porte et la paroi.

10. Boîtier selon la revendication 9, dans lequel le système de blocage comprend en outre deux surfaces de limitation parallèles (25, 25'), qui entourent la partie rigide et qui sont adaptées à limiter la déflexion de la languette susceptible d'être défléchie lors de l'encliquetage.

11. Prise électrique comprenant un boîtier selon l'une quelconque des revendications 1 à 10, et dans lequel la paroi entoure des contacts électriques.
